# EUROPEAN PATENT APPLICATION

(11) **EP 4 306 600 A1**
(43) Date of publication of application: **17.01.2024**
(21) Application number: 23170956.9
(22) Date of filing: 02.05.2023
(51) Int. Cl.: C09D 11/00, C09B 67/22

(54) **REACTIVE DYE COMPOSITION AND APPLICATION THEREOF**

(30) Priority: 09.05.2022 TW 111117284; 01.03.2023 TW 112107239
(71) Applicant: Everlight Chemical Industrial Corporation, 106 Taipei City (TW)
(72) Inventor: LIN, Wen-Chin, 328 Taoyuan City (TW); LEE, Chwan-Hsi, 328 Taoyuan City (TW); CHEN, Hsiao-San, 328 Taoyuan City (TW)
(74) Representative: van Dam, Vincent

(57) **Abstract**

A reactive dye composition is provided, which comprises: a red reactive dye represented by the following formula (I), and at least one reactive dye selected from the group consisting of a blue reactive dye represented by the following formula (II) and an orange reactive dye represented by the following formula (III); and an organic buffer. In addition, the aforesaid reactive dye composition can be used to prepare an ink for digital printing. 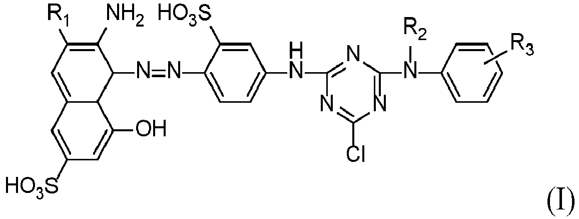 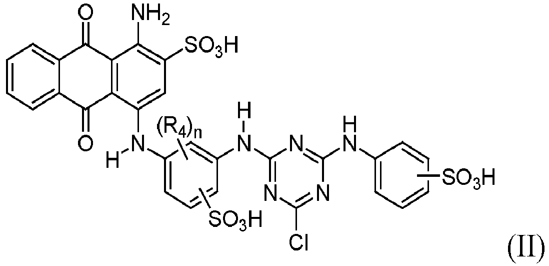 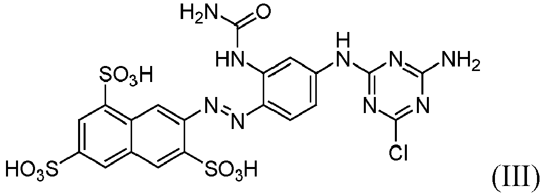 Herein, R₁, R₂, R₃, R₄ and n are defined in the specification.

## Description

### CROSS-REFERENCE TO RELATED APPLICATIONS

This application claims the benefits of the Taiwan Patent Application Serial Numbers 111117284 and 112107239, respectively filed on May 9, 2022 and March 1, 2023.

### BACKGROUND OF THE INVENTION

### Field

The present invention relates to a reactive dye composition and an application thereof. More specifically, the present invention relates to a reactive dye composition for various colors and shades, more suitable for light color dyeing and an application thereof.

### Description of Related Art

Most of the printed products with high sunlight characteristics are dark products at high dye concentration, and the light color printed products with high sunlight characteristics has always been a product that is eagerly awaited in the market. Especially, the light fastness of currently available grey dyes on the market is only about grade 2 or even grade 1 when dyeing at low dye concentrations, which does not meet market demand. In order to get high light fastness properties at light color printed product, most of the currently available dyes are metal complex which contained metals such as cobalt, chromium or copper, for example Reactive Black 8.

In view of this, it is desirable to provide a black dye that is suitable for dyeing at light colors and has high light fastness, and also can eliminate the use of metal complex dyes to achieve the purpose of green chemistry.

### SUMMARY OF THE INVENTION

The present invention provides a reactive dye composition, which comprises: a red reactive dye, and at least one reactive dye selected from the group consisting of a blue reactive dye and an orange reactive dye; and an organic buffer, wherein the red reactive dye is represented by the following formula (I), the blue reactive dye is represented by the following formula (II) and the orange reactive dye is represented by the following formula (III): 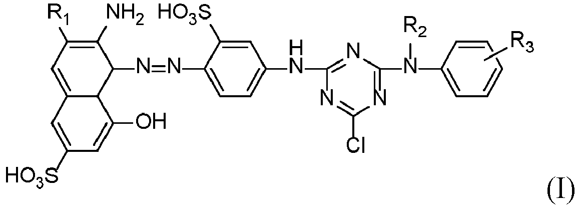 wherein R₁ is H or -SO₃H, R₂ is C₁₋₄ alkyl, and R₃ is H, -SO₂C₂H₄OSO₃H or 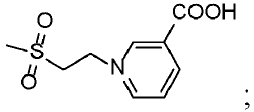 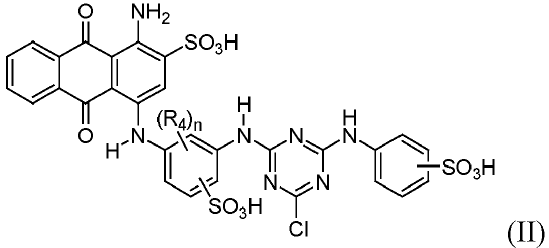 wherein R₄ is C₁₋₄ alkyl and n is an integer of 0 to 3;

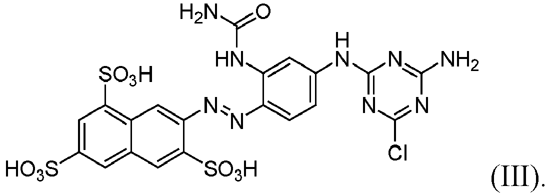

In the present invention, the red reactive dye represented by the formula (I) is mixed with the blue reactive dye represented by the formula (II) and/or the orange reactive dye represented by the formula (III) to form a reactive dye composition. When the reactive dye composition of the present invention is formulated into an ink for digital printing or printing paste, the light fastness of AATCC gray scale can be achieved to 4 to 5 or above when dyed at light colors.

In one embodiment of the present invention, in the formula (I), R₁ may be H or -SO₃H.

In one embodiment of the present invention, in the formula (I), R₂ may be C₁₋₄ alkyl. In one embodiment of the present invention, R₂ may be methyl or ethyl.

In one embodiment of the present invention, in the formula (I), R₃ may be H, -SO₂C₂H₄OSO₃H or 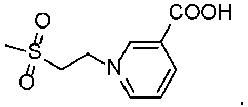 In one embodiment of the present invention, R₃ may be H or -SO₂C₂H₄OSO₃H.

In one embodiment of the present invention, the red reactive dye of the formula (I) may be at least one red reactive dye represented by the following formulas (I-1) to (I-3): 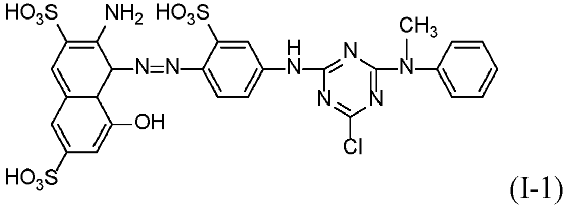 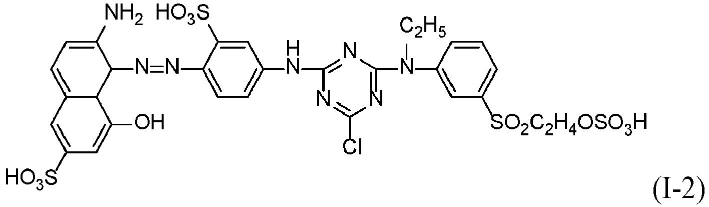 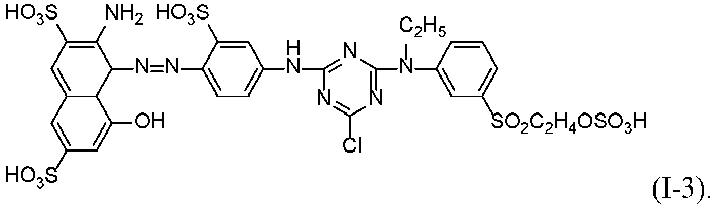 Herein, the methods for synthesizing the red reactive dyes of the formulas (I-1) to (I-3) may be referred to Embodiments 2, 6 and 9 of TWI301501.

In one embodiment of the present invention, in the formula (II), R₄ may be C₁₋₄ alkyl. In one embodiment of the present invention, R₄ may be methyl.

In one embodiment of the present invention, the blue reactive dye of the formula (II) may be at least one blue reactive dye represented by the following formulas (II-1) to (II-3): 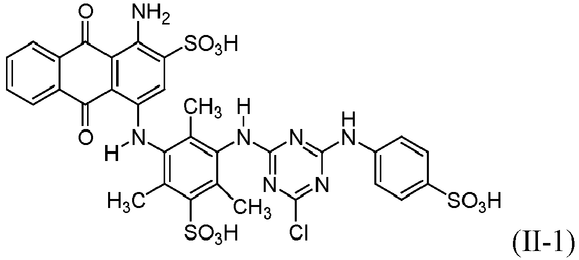 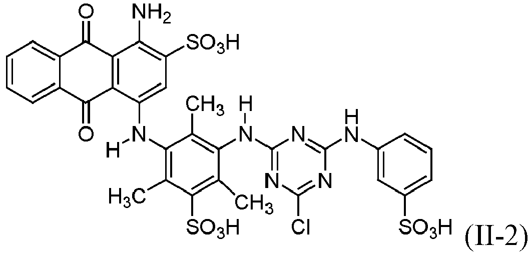 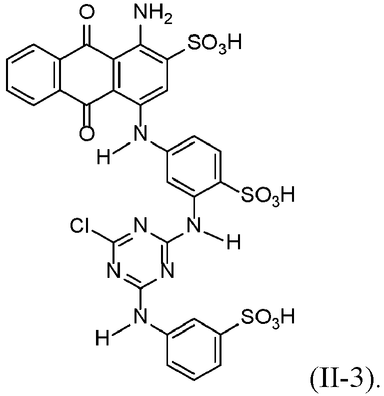 In one embodiment of the present invention, the blue reactive dye may be the blue reactive dye of formula (II-1), the blue reactive dye of formula (II-2), the blue reactive dye of formula (II-3) or a mixture thereof, which is C.I. reactive blue 49, C.I. reactive blue 5 or a mixture thereof.

In one embodiment of the present invention, the orange reactive dye of the formula (III) is C.I. reactive orange 12.

In one embodiment of the present invention, the organic buffer may be a compound represented by the following formula (IV) or a salt thereof:

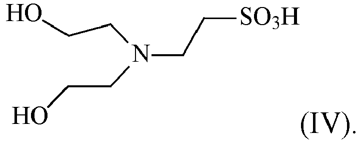

In one embodiment of the present invention, the content of the organic buffer may range from 0.01 parts by weight to 5.0 parts by weight. Herein, the content of the organic buffer may be adjusted according to the properties of the reactive dyes or the required color intensity.

In one embodiment of the present invention, the content of the red reactive dye may range from 0.1 parts by weight to 50.0 parts by weight, and the content of the at least one reactive dye (the blue reactive dye and/or the orange reactive dye) may range from 50.0 parts by weight to 99.9 parts by weight. In another embodiment of the present invention, the content of the red reactive dye may range from 1.0 parts by weight to 50.0 parts by weight, and the content of the at least one reactive dye (the blue reactive dye and/or the orange reactive dye) may range from 50.0 parts by weight to 99.0 parts by weight.

In one embodiment of the present invention, when the reactive dye composition comprises the blue reactive dye, the content of the blue reactive dye may range from 30.0 parts by weight to 95.0 parts by weight. In one embodiment of the present invention, when the reactive dye composition comprises the orange reactive dye, the content of the orange reactive dye may range from 5.0 parts by weight to 90.0 parts by weight. However, the present invention is not limited thereto, and the ratio of the reactive dyes with different colors may be adjusted according to the properties of the reactive dyes or the required color intensity.

In one embodiment of the present invention, the reactive dye composition comprises the red reactive dye and the blue reactive dye. Herein, the content of the red reactive dye may range from 10.0 parts by weight to 30.0 parts by weight, and the content of the blue reactive dye may range from 70.0 parts by weight to 90 parts by weight. In one embodiment of the present invention, the content of the red reactive dye may range from 15.0 parts by weight to 25.0 parts by weight, and the content of the blue reactive dye may range from 75.0 parts by weight to 85.0 parts by weight. In one embodiment of the present invention, the content of the red reactive dye may be about 20.0 parts by weight, and the content of the blue reactive dye may be about 80.0 parts by weight. However, the present invention is not limited thereto, and the ratio of the reactive dyes with different colors may be adjusted according to the properties of the reactive dyes or the required color intensity.

In one embodiment of the present invention, the reactive dye composition comprises the red reactive dye and the orange reactive dye. Herein, the content of the red reactive dye may range from 5.0 parts by weight to 25.0 parts by weight, and the content of the orange reactive dye may range from 75.0 parts by weight to 95.0 parts by weight. In one embodiment of the present invention, the content of the red reactive dye may range from 10.0 parts by weight to 20.0 parts by weight, and the content of the orange reactive dye may range from 80.0 parts by weight to 90.0 parts by weight. In one embodiment of the present invention, the content of the red reactive dye may be about 15.0 parts by weight, and the content of the orange reactive dye may be about 85.0 parts by weight. However, the present invention is not limited thereto, and the ratio of the reactive dyes with different colors may be adjusted according to the properties of the reactive dyes or the required color intensity.

In one embodiment of the present invention, the reactive dye composition comprises the red reactive dye, the blue reactive dye and the orange reactive dye. Herein, the content of the red reactive dye may range from 0.5 parts by weight to 50.0 parts by weight, the content of the blue reactive dye may range from 20.0 parts by weight to 95.0 parts by weight, and the content of the orange reactive dye may range from 5.0 parts by weight to 30.0 parts by weight. In one embodiment of the present invention, the content of the red reactive dye may range from 0.5 parts by weight to 45.0 parts by weight, the content of the blue reactive dye may range from 35.0 parts by weight to 95.0 parts by weight, and the content of the orange reactive dye may range from 8.5 parts by weight to 25.0 parts by weight. In one embodiment of the present invention, the content of the red reactive dye may range from 1.5 parts by weight to 40.0 parts by weight, the content of the blue reactive dye may range from 40.0 parts by weight to 90.0 parts by weight, and the content of the orange reactive dye may range from 8.5 parts by weight to 20.0 parts by weight. However, the present invention is not limited thereto, and the ratio of the reactive dyes with different colors may be adjusted according to the properties of the reactive dyes or the required color intensity.

Except for the aforesaid reactive dye composition, the present invention further provides the application of the aforesaid reactive dye composition.

The present invention provides a printing paste comprising the aforesaid reactive dye composition, wherein the content of the reactive dye composition may range from 0.001 wt% to 5 wt% based on a total weight of the printing paste (100 wt%). In one embodiment of the present invention, the content of the reactive dye composition may range from 0.01 wt% to 2 wt%. In another embodiment of the present invention, the content of the reactive dye composition may range from 0.1 wt% to 1 wt%. In one embodiment of the present invention, the content of the reactive dye composition may be about 0.2 wt%. In addition, the printing paste may selectively further comprise an additive, for example, selected from a pasting agent (for example, sodium alginate, carboxymethyl cellulose paste, emulsified paste, CMC paste with a high degree of etherification, synthetic paste or a combination thereof), an alkaline agent (for example, NaHCO₃, Na₂CO₃, NaOH or a combination thereof), a reduction preventing agent (for example, m-nitrobenzene sulfonate), a co-solvent (for example, urea, glycerin, or a combination thereof), and a chelating agent (for example, EDTA). Herein, based on the total weight of the printing paste, the content of the pasting agent may range from 3 wt% to 6 wt%, the content of the alkaline agent may range from 1 wt% to 3 wt%, the content of the reduction preventing agent may range from 1 wt% to 2 wt%, the content of the co-solvent may range from 5 wt% to 15 wt%, and the content of the chelating agent may range from 0 wt% to 0.5 wt%. However, the present invention is not limited thereto, and the aforesaid contents may be adjusted according to the required property of the printing paste. In addition, the rest amount of the printing paste may be a solvent, such as water.

The present invention further provides an ink composition for digital printing, which comprises the aforesaid reactive dye composition. More specifically, the ink composition for digital printing of the present invention comprises: a reactive dye composition and a solvent. Herein, the reactive dye composition comprises: the red reactive dye represented by the aforesaid formula (I), and at least one reactive dye selected from the group consisting of the blue reactive dye represented by the aforesaid formula (II) and the orange reactive dye represented by the aforesaid formula (III); and an organic buffer.

In one embodiment of the present invention, based on the total weight of the ink composition for digital printing (100 wt%), the content of the reactive dye composition may range from 0.01 wt% to 40.0 wt%. In one embodiment of the present invention, the content of the reactive dye composition may range from 0.05 wt% to 35.0 wt%. In another embodiment of the present invention, the content of the reactive dye composition may range from 0.2 wt% to 30.0 wt%.

In one embodiment of the present invention, the solvent may be selected from the group consisting of ethylene glycol, diethylene glycol, triethylene glycol, tetraethylene glycol, polyethylene glycol, 1,2-propylene glycol, 1,3-propylene glycol, glycerin, dipropylene glycol, tripropylene glycol, polypropylene glycol, ethanedithiol, ethylene glycol monoethyl ether, ethylene glycol monobutyl ether, diethylene glycol monobutyl ether, dipropylene glycol monoethyl ether, triethylene glycol monomethyl ether, diethylene glycol ether, 1,2-hexanediol, acetone, methyl ethyl ketone, caprolactam, N,N-diethylformamide, N,N-dimethylacetamide, 2-pyrrolidone, 2-pyrrolidinone, N-methyl-2-pyrrolidone, N-vinyl-2-pyrrolidone, 1,3-dimethyl-2-tetrahydroimidazolone, tetrahydrofuran, 1,4-dioxane, methanol, ethanol, 1- propanol, 2-propanol, 1-butanol, 2-butanol, water and a combination thereof. In one embodiment of the present invention, the solvent comprises glycerin, ethylene glycol, 1,2-propanediol and water. In one embodiment of the present invention, the solvent comprises ethylene glycol, 1,2-propanediol, dipropylene glycol, and water. In one embodiment of the present invention, the solvent comprises glycerin, ethylene glycol, 1,2-propanediol and water. However, the present invention is not limited thereto, and the solvent may be selected according to the need. In addition, when plural solvents are used together, the ratios of the solvents may be adjusted according to the need.

In one embodiment of the present invention, the ink composition for digital printing may selectively further comprise an ink buffer. In one embodiment of the present invention, the ink buffer may be a compound represented by the aforesaid formula (IV) or a salt thereof. In addition, based on the total weight of the ink composition for digital printing (100 wt%), the content of the ink buffer may range from 0.1 wt% to 5.0 wt%. In one embodiment of the present invention, based on the total weight of the ink composition for digital printing (100 wt%), the content of the ink buffer may range from 1 wt% to 3.0 wt%.

In one embodiment of the present invention, the ink composition for digital printing may selectively further comprise a surfactant. Examples of the surfactant may include, but are not limited to an alkyne diol-based surfactant, an alkoxylate surfactant, a fluorosurfactant of a nonionic polymer, and a combination thereof. In addition, based on the total weight of the ink composition for digital printing (100 wt%), the content of the surfactant may range from 0.1 wt% to 2.0 wt%. In one embodiment of the present invention, based on the total weight of the ink composition for digital printing (100 wt%), the content of the surfactant may range from 0.2 wt% to 0.6 wt%.

In one embodiment of the present invention, the ink composition for digital printing may selectively further comprise an antibacterial agent. In addition, based on the total weight of the ink composition for digital printing (100 wt%), the content of the antibacterial agent may range from 0.05 wt% to 0.5 wt%. In one embodiment of the present invention, based on the total weight of the ink composition for digital printing (100 wt%), the content of the antibacterial agent may range from 0.2 wt% to 0.3 wt%. In one embodiment of the present invention, the antibacterial agent may be 1,2-benzisothiazol-3-one (BIT). However, the present invention is not limited thereto, and other antibacterial agent commonly used in the art can also be used.

The printing paste or the ink composition for digital printing provided by the present invention is suitable for printing and dyeing fabrics, such as cellulose fibers and other mixed fibers, including cotton, linen, silk, rayon, wool, nylon, blended fibers, etc. In addition, the printing paste or the ink composition for digital printing provided by the present invention can be used in various jet printing, and can exhibit good light fastness.

Other novel features of the present invention will become more apparent from the following detailed description when taken in conjunction with the accompanying drawings.

### DETAILED DESCRIPTION OF THE INVENTION

The following embodiments are made to clearly exhibit the above-mentioned and other technical contents, features and/or effects of the present invention. Through the exposition by means of the specific embodiments, people would further understand the technical means and effects the present invention adopts to achieve the above-indicated objectives. Moreover, as the contents disclosed herein should be readily understood and can be implemented by a person skilled in the art, all equivalent changes or modifications which do not depart from the concept of the present invention should be encompassed by the appended claims.

It should be noted that, in the present specification, when a component is described to have an element, it means that the component may have one or more of the elements, and it does not mean that the component has only one of the element, except otherwise specified.

In the present specification, except otherwise specified, the term "or" used in the specification and the appended claims generally includes the meaning of "and/or".

In the present specification, the terms "almost", "about" and "approximately" mean within ±20%, within ±10%,within ±5%, within ±3%, within ±2%, within ±1%, or within ±0.5% of a given value or range. The quantity given here is an approximate quantity, that is, without specifying "almost", "about" and "approximately", it can still imply "almost", "about" and "approximately". In addition, the term "in the range from the first value to the second value" or "in the range between the first value and the second value" means that the range includes the first value, the second value and a value between the first value and the second value.

Different embodiments of the present invention are provided in the following description. These embodiments are meant to explain the technical content of the present invention, but not meant to limit the scope of the present invention. Unless otherwise specified, in the following preparation examples, embodiments and comparative embodiments, the temperature is shown by Celsius, the parts and percentages are shown by weight. The relationship between parts by weight and parts by volume is like the relationship between kilograms and liters.

Preparation of the reactive dye composition of Embodiments and Comparative embodiments

Reactive dyes (its components and ratio are shown in the following Tables 1 and 2) were mixed. For example, in Embodiment 1, 40 parts by weight of the dye of formula (I-2), 40 parts by weight of the dye of formula (II-1) and 20 parts by weight of the dye of formula (III) were added into 900 parts by weight of water and mixed well. Then, the pH value of the mixture was adjusted to 6.0 to 9.0. After purification, 2 parts by weight of the organic buffer of formula (IV), N,N-di(2-hydroxyethyl)-2-aminoethanesulfonic acid was added, followed by stirring evenly and adjusting the pH value to 6.0 to 9.0. Finally, the solution was spray-dried to obtain the dye composition of Embodiment 1. Similarly, Embodiments 2-9 and Comparative embodiments 1-5 were prepared by the same process, and the reactive dye compositions of Embodiments 2-9 and Comparative Embodiments 1-5 were obtained.

The components and ratios of the reactive dyes with various colors in the reactive dye compositions of Embodiments (abbreviated as Ex) and Comparative embodiments (abbreviated as Comp ex) are as shown in the following Tables 1 and 2. In Tables 1 and 2, the parts by weight of the reactive dyes with different colors are listed.

**Table 1: Components of Embodiments (unit: parts by weight)**

| Dye | Ex 1 | Ex 2 | Ex 3 | Ex 4 | Ex 5 | Ex 6 | Ex 7 | Ex 8 | Ex 9 |
|---|---|---|---|---|---|---|---|---|---|
| Formula I-1 | -- | 20.0 | -- | 10.0 | 1.5 | -- | 20.0 | 15.0 | 20.0 |
| Formula I-2 | 40.0 | -- | -- | -- | -- | 5.0 | -- | -- | -- |
| Formula I-3 | -- | -- | 15.0 | -- | -- | -- | -- | -- | -- |
| Formula II-1 | 40.0 | 70.0 | 70.0 | 75.0 | 90.0 | 80.0 | 80.0 | - | -- |
| Formula II-2 | -- | -- | -- | -- | -- | -- | -- | -- | 70.0 |
| Formula III | 20.0 | 10.0 | 15.0 | 15.0 | 8.5 | 15.0 | - | 85.0 | 10.0 |
| Total | 100.0 | 100.0 | 100.0 | 100.0 | 100.0 | 100.0 | 100.0 | 100.0 | 100.0 |

**Table 2: Components of Comparative embodiments (unit: parts by weight)**

| Dye | Comp Ex 1 | Comp Ex 2 | Comp Ex 3 | Comp Ex 4 | Comp Ex 5 |
|---|---|---|---|---|---|
| C.I. Reactive Red 218 | -- | -- | -- | 20.0 | 15.0 |
| C.I. Reactive Red 3:1 | 15.0 | 8.0 | -- | --- | -- |
| C.I. Reactive Red 24.1 | -- | 7.0 | 9.0 | -- | -- |
| C.I. Reactive Blue 49 | 45.8 | | 62.2 | -- | -- |
| C.I. Reactive Blue 222 | -- | -- | -- | -- | 70.0 |
| C.I. Reactive Blue 176 | 22.9 | 65.0-- | 10.8 | 80.0 | -- |
| C.I. Reactive Orange 12 | 16.3 | -- | 3.2 | -- | -- |
| C.I. Reactive Orange 13 | -- | 20.0 | -- | -- | -- |
| C.I. Reactive Orange 99 | -- | -- | 14.8 | -- | -- |
| C.I. Reactive Yellow 176 | -- | -- | -- | -- | 15.0 |
| Total | 100.0 | 100.0 | 100.0 | 100.0 | 100.0 |

### Printing of Embodiments and Comparative embodiments

The dye compositions of Embodiments and Comparative embodiments were added into a paste composition (as shown in Table 3) followed by stirring for 10-15 minutes to dissolve the dye compositions completely. Printing was carried out in a printing machine, and the colored fabric was dried according to the routine procedure after printing. The dried fabric was placed in a steamer and steamed with normal pressure saturated steam at 102-105°C for 5-12 minutes. Then, the colored fabric was washed with cold water, washed with boiling hot water for 10 minutes, put into boiling solution containing the non-ionic detergent and washed for 10 minutes, and then rinsed with cold water once or twice.

**Table 3: Components of printing paste (unit: wt%)**

| Item | Component (wt%) |
|---|---|
| Reactive dye composition | 0.2 |
| Sodium alginate | 5.5 |
| Sodium bicarbonate | 2.0 |
| Reduction preventing agent | 1.0 |
| Urea | 10.0 |
| RO water | Add to 100.0 |
| Total | 100.0 |

### Inkjet printing of Embodiments and Comparative embodiments

According to the following Table 3-1, the reactive dye compositions of Embodiments and Comparative embodiments were mixed with glycerin, ethylene glycol, 1,2-propanediol, dipropylene glycol, an ink buffer, a surfactant, an antibacterial agent and water to obtain 1000.0 g of the digital printing ink. The obtained digital printing ink was jet-printed on the pretreated cotton fabric by MS JP-6 machine. After drying with routine procedure, the dried fabric was placed in a steamer and steamed with normal pressure saturated steam at 102-105°C for 5-12 minutes. Then, the colored fabric was washed with cold water, washed with boiling hot water for 10 minutes, put into boiling solution containing the non-ionic detergent and washed for 10 minutes, and then rinsed with cold water once or twice.

**Table 3-1: Ink composition (unit: wt%)**

| Item | Components of Formulation I (wt%) | Components of Formulation II (wt%) | Components of Formulation III (wt%) |
|---|---|---|---|
| Reactive dye composition | 0.2 | 5.0 | 30.0 |
| Glycerin | 5.0 | 0.0 | 2.0 |
| Ethylene glycol | 30.0 | 10.0 | 20.0 |
| 1,2-Propanediol | 35.0 | 20.0 | 1.0 |
| Dipropylene glycol | 0.0 | 20.0 | 0 |
| Surfactant | 0.6 | 0.4 | 0.2 |
| 1,2-Benzisothiazol-3-one | 0.2 | 0.2 | 0.3 |
| N,N-bis(2-hydroxyethyl)-2-aminoethanesulfonic acid | 1.0 | 1.0 | 3.0 |
| RO water | Add to 100.0 | Add to 100.0 | Add to 100.0 |
| Total | 100.0 | 100.0 | 100.0 |

### Light fastness test

The colored fabrics obtained by the printing or inkjet printing of the aforesaid embodiments and comparative embodiments were washed and dried, and the dried colored fabrics were tested for light fastness according to the test method of AATCC 16-3.
Instrument: ATLAS
Test method: AATCC 16-3 (2004)
Irradiation energy: 20 AFU
Evaluation standard: AATCC gray scale 1~5, with grade 5 being the best and grade 1 being the worst.

The test results are shown in Table 4 and Table 5 below.

**Table 4: Light fastness of Embodiments**

| | Ex 1 | Ex 2 | Ex 3 | Ex 4 | Ex 5 | Ex 6 | Ex 7 | Ex 8 | Ex 9 |
|---|---|---|---|---|---|---|---|---|---|
| General printing | 4-5 | 5 | 4-5 | 4-5 | 4-5 | 4-5 | 4-5 | 4-5 | 4-5 |
| Inkjet printing Formulation I | 4 | 4 | 4 | 4 | 4 | 4 | 4-5 | 4-5 | 4 |
| Inkjet printing Formulation II | 4-5 | 5 | 4-5 | 4-5 | 4-5 | 4-5 | 4-5 | 4-5 | 4-5 |
| Inkjet printing Formulation III | 5 | 5 | 5 | 5 | 5 | 5 | 5 | 5 | 5 |

**Table 5: Light fastness of Comparative embodiments**

| | Comp Ex 1 | Comp Ex 2 | Comp Ex 3 | Comp Ex 4 | Comp Ex 5 | Comp Ex 6 | Comp Ex 7 | Comp Ex 8 |
|---|---|---|---|---|---|---|---|---|
| General printing | 3-4 | 2-3 | 3-4 | 3 | 3-4 | 2-3 | 2-3 | 3 |
| Inkjet printing Formulation I | 2-3 | 2 | 2-3 | 2-3 | 2-3 | 2 | 2 | 2 |
| Inkjet printing Formulation II | 3-4 | 3 | 3-4 | 3 | 3-4 | 3-4 | 3-4 | 4 |
| Inkjet printing Formulation III | 4 | 4 | 4 | 4 | 4 | 4 | 4 | 4 |

Comparative embodiment 6 (Comp Ex 6) used the commercially available product PROCION BLACK PX-2R; Comparative embodiment 7 (Comp Ex 7) used the commercially available product NOVACRON BLACK PGR; Comparative embodiment 8 (Comp Ex 8) used the commercially available product Reactive Black 8.

The results shown in Table 4 indicate that, in the dye compositions of Embodiments 1 to 9, the obtained printed or inkjet-printed fabrics have the high light fastness of 4 to 5 or more at the dye concentrations ranging from 0.2 wt% to 30.0 wt% when the reactive dye compositions comprise the red reactive dye of the formula (I) and the blue reactive dye of the formula (II) and/or the orange reactive dye of the formula (III).

The results shown in Table 5 indicate that, the light fastness of the printed fabrics are all poorer than those of Embodiments 1 to 9 at the dye concentrations ranging from 0.2 wt% to 30.0 wt% when the reactive dye compositions do not comprise the red reactive dye (for example, Comparative embodiments 1 to 4). The light fastness of the printed fabrics are all poorer than those of Embodiments 1 to 9 at the dye concentrations ranging from 0.2 wt% to 30.0 wt% when the reactive dye compositions do not comprise the blue reactive dye of the formula (II) (for example, Comparative embodiments 4 and 5). The light fastness of the printed fabrics are all poorer than those of Embodiments 1 to 9 at the dye concentrations ranging from 0.2 wt% to 30.0 wt% when the reactive dye compositions do not comprise the orange reactive dye of the formula (III) (for example, Comparative embodiments 2 and 5). In addition, compared with commercially available products (for example, Comparative embodiments 6 to 8), at the dye concentrations ranging from 0.2 wt% to 30.0 wt%, the light fastness of the printed or inkjet-printed fabrics obtained in Embodiments 1 to 9 is significantly improved compared with the comparative embodiments.

In conclusion, the reactive dye composition is obtained by combining the red reactive dye of the formula (I) with the blue reactive dye of the formula (II) and/or the orange reactive dye of the formula (III) in the present invention. When the reactive dye composition of the present invention is formulated into general printing paste or digital printing ink for light color dyeing, the resulting printed or inkjet-printed fabric has excellent light fastness.

## Claims

1. A reactive dye composition, comprising:
a red reactive dye, and at least one reactive dye selected from the group consisting of a blue reactive dye and an orange reactive dye, wherein the red reactive dye is represented by the following formula (I), the blue reactive dye is represented by the following formula (II) and the orange reactive dye is represented by the following formula (III): 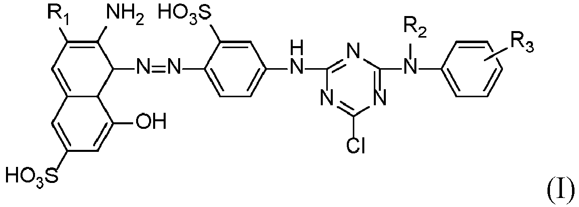 wherein R₁ is H or -SO₃H, R₂ is C₁₋₄ alkyl, and R₃ is H, -SO₂C₂H₄OSO₃H or 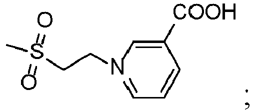 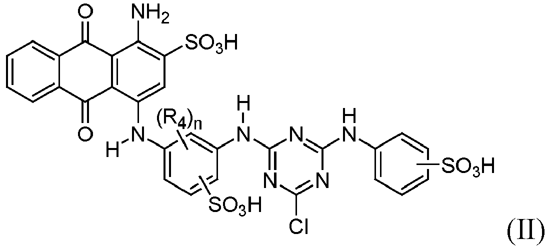 wherein R₄ is C₁₋₄ alkyl and n is an integer of 0 to 3; 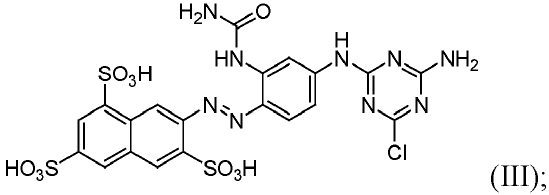 and
an organic buffer.

2. The reactive dye composition of claim 1, wherein in the formula (I), R₂ is methyl or ethyl, and R₃ is H or -SO₂C₂H₄OSO₃H, preferably wherein the red reactive dye is at least one red reactive dye represented by the following formulas (I-1) to (I-3):

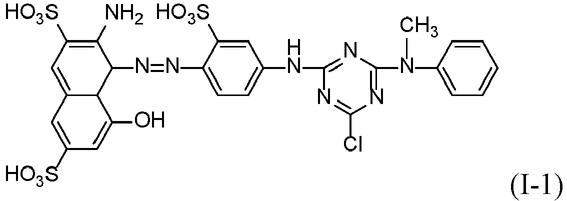

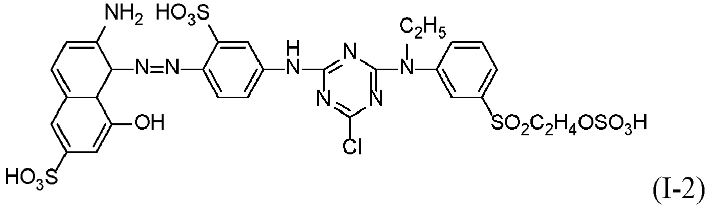

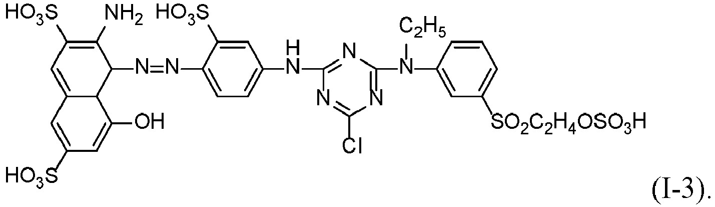

3. The reactive dye composition of claim 1, wherein in the formula (II), R₄ is methyl, preferably wherein the blue reactive dye is at least one blue reactive dye represented by the following formulas (II-1) to (II-3):

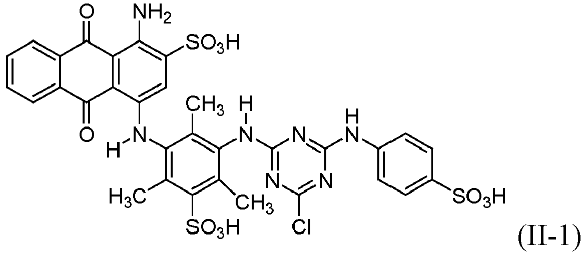

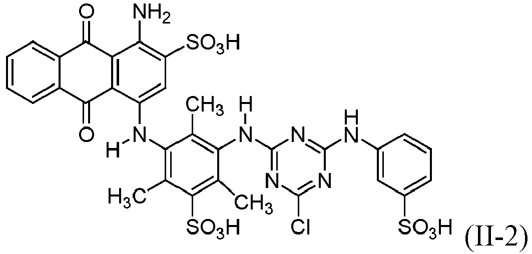

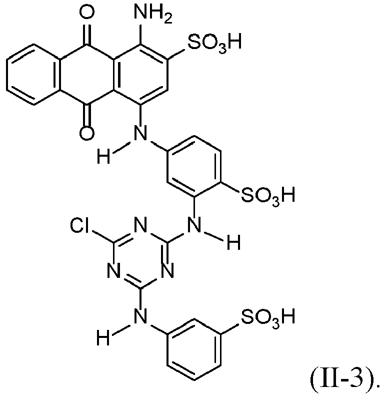

4. The reactive dye composition of any of the previous claims, wherein a content of the red reactive dye ranges from 0.1 parts by weight to 50.0 parts by weight, and a content of the at least one reactive dye ranges from 50.0 parts by weight to 99.9 parts by weight.

5. The reactive dye composition of any of the previous claims, wherein a content of the organic buffer ranges from 0.01 parts by weight to 5.0 parts by weight.

6. The reactive dye composition of any of the previous claims, wherein a content of the blue reactive dye ranges from 30.0 parts by weight to 95.0 parts by weight when the reactive dye composition comprises the blue reactive dye.

7. The reactive dye composition of any of the previous claims, wherein a content of the orange reactive dye ranges from 5.0 parts by weight to 90.0 parts by weight when the reactive dye composition comprises the orange reactive dye.

8. The reactive dye composition of any of the previous claims, wherein the organic buffer is a compound represented by the following formula (IV) or a salt thereof:

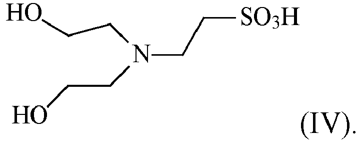

9. Use of the reactive dye composition of any of the previous claims, for preparing an ink for digital printing.

10. An ink composition for digital printing, comprising:
a reactive dye composition according to any of the claims 1 to 8; and
a solvent.

11. The ink composition for digital printing of claim 10, comprising:
0.1 wt% to 30.0 wt% of the reactive dye composition;
0.1 wt% to 5.0 wt% of an ink buffer; and
rest of the solvent.

12. The ink composition for digital printing of claim 10 or 11, wherein the ink buffer is a compound represented by the following formula (IV) or a salt thereof:

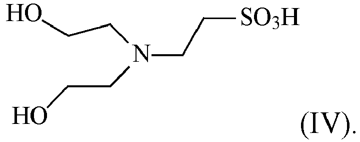

13. The ink composition for digital printing of any of the claims 10 to 12, wherein the solvent is selected from the group consisting of ethylene glycol, diethylene glycol, triethylene glycol, tetraethylene glycol, polyethylene glycol, 1,2-propylene glycol, 1,3-propylene glycol, glycerin, dipropylene glycol, tripropylene glycol, polypropylene glycol, ethanedithiol, ethylene glycol monoethyl ether, ethylene glycol monobutyl ether, diethylene glycol monobutyl ether, dipropylene glycol monoethyl ether, triethylene glycol monomethyl ether, diethylene glycol ether, 1,2-hexanediol, acetone, methyl ethyl ketone, caprolactam, N,N-diethylformamide, N,N-dimethylacetamide, 2-pyrrolidone, 2-pyrrolidinone, N-methyl-2-pyrrolidone, N-vinyl-2-pyrrolidone, 1,3-dimethyl-2-tetrahydroimidazolone, tetrahydrofuran, 1,4-dioxane, methanol, ethanol, 1-propanol, 2-propanol, 1-butanol, 2-butanol, water and a combination thereof.

14. The ink composition for digital printing of claim any of the claims 10 to 13, further comprising a surfactant, wherein the surfactant is selected from the group consisting of an alkyne diol-based surfactant, an alkoxylate surfactants, a fluorosurfactant of a nonionic polymer, and a combination thereof, and a content of the surfactant ranges from 0.1 wt% to 2.0 wt%.

15. The ink composition for digital printing of any of the claims 10 to 14, further comprising an antibacterial agent, wherein a content of the antibacterial agent ranges from 0.05 wt% to 0.5 wt%.
